# EUROPÄISCHE PATENTSCHRIFT

(11) **EP 3 564 071 B1**
(45) Veröffentlichungstag und Bekanntmachung des Hinweises auf die Patenterteilung: **27.01.2021**
(21) Anmeldenummer: 19000212.1
(22) Anmeldetag: 02.05.2019
(51) Int. Cl.: B60P 1/44

(54) **BEDIENEINRICHTUNG FÜR EINE HUBLADEBÜHNE**
OPERATING DEVICE FOR A LIFTING LOAD PLATFORM
DISPOSITIF DE COMMANDE POUR UNE PLATEFORME DE CHARGEMENT PAR LEVAGE

(30) Priorität: 04.05.2018 DE 102018003577
(43) Veröffentlichungstag der Anmeldung: 06.11.2019
(73) Patentinhaber: Palfinger Tail Lifts GmbH, 27777 Ganderkesee (DE)
(72) Erfinder: Bley, Hubert, 49681 Garrel (DE)
(74) Vertreter: Möller, Friedrich

(56) Entgegenhaltungen:
- EP-A1- 0 101 865
- EP-A1- 0 773 136
- US-A1- 2009 240 402

## Beschreibung

Die Erfindung betrifft eine Bedieneinrichtung für eine Hubladebühne an Fahrzeugen gemäß dem Oberbegriff des Anspruchs 1. Eine solche Bedieneinrichtung ist aus der EP 0 773 136 A1 bekannt.

Hubladebühnen dienen dazu, das Be- und Entladen von Fahrzeugen mit insbesondere schweren Gegenständen zu erleichtern. Hubladebühnen verfügen über eine vorzugsweise an der Rückseite eines Fahrzeugaufbaus mindestens heb- und senkbar, vorzugsweise auch schwenkbar, angelenkte Ladeplattform.

Das Heben, Senken und Verschwenken der Ladeplattform wird von einer Bedienperson mittels einer Bedieneinrichtung gesteuert. Die Bedieneinrichtung kann außerdem zur Steuerung anderer Funktionen dienen, die mit der Hubladebühne zusammenhängen, beispielsweise zum Ein- und Ausfahren von Stützen. Sicherheitsvorschriften erfordern es, dass eine sogenannte Zweihandbedienung erfolgt. Dazu muss die Bedienungsperson mit beiden Händen jeweils ein Bedienorgan der Bedieneinrichtung betätigen, damit die Ladeplattform der Hubladebühne die gewünschte Bewegung ausführt.

Bekannte Bedierieinrichtungen sind im Wesentlichen als kastenförmige Gehäuse ausgebildet. Diese kastenförmigen Gehäuse weisen alle Bedienorgane und sonstige Steuermittel auf. In der Regel werden diese Bedieneinrichtungen in der Nähe der Hubladebühne an der Unterseite der Ladeplattform positioniert. Aufgrund der kastenartigen Gestalt nimmt die Bedieneinrichtung sehr viel Platz in Anspruch und kann daher nur an einigen bestimmten Stellen befestigt werden. Insbesondere muss diese kastenförmige Bedieneinrichtung derart unterhalb der Ladeplattform befestigt werden, dass sie nicht über die Breite der Ladeplattform hinausragt und so für den Verkehr eine Gefahr darstellt.

Der Erfindung liegt die Aufgabe zugrunde, eine Bedieneinrichtung für insbesondere Hubladebühnen an Fahrzeugen zu schaffen, die auf eine platzsparende und flexible Art und Weise an dem Fahrzeug befestigbar ist.

Eine Bedieneinrichtung zur Lösung dieser Aufgabe weist die Merkmale des Anspruchs 1 auf. Demnach ist es vorgesehen, dass die Bedieneinrichtung mehrere Bedienfelder mit Bedienorganen aufweist, wobei die Bedienfelder mit den Bedienorganen auf einem plattenartigen Träger angeordnet sind. Aufgrund dieser plattenartigen Form lässt sich der Träger mitsamt den Bedienorganen auf eine sehr platzsparende und flexible Art und Weise an dem Fahrzeug befestigen. Aufgrund der geringen Tiefe des plattenartigen Trägers könnte der Träger auch direkt an der Hubladebühne befestigt werden, ohne in den Verkehr hineinzuragen.

Bevorzugt kann es vorgesehen sein, dass der Träger rechteckig ausgebildet ist und zwei gegenüberliegende Abschnitte des Trägers jeweils ein Bedienfeld aufweisen, nämlich ein erstes und ein zweites Bedienfeld. Dabei ist der Träger bzw. sind die Bedienfelder und der Abschnitt der Bedienfelder bzw. der auf den Bedienfeldern angeordneten Bedienorganen derart bemessen, dass die Sicherheitsmaßnahmen für die geforderte Zweihandbedienung eingehalten werden. Durch die Aufteilung des Trägers in ein erstes Bedienfeld und ein zweites Bedienfeld, lassen sich die Bedienorgane auf den Bedienfeldern bequem und auf eine ergonomische Art und Weise von einer Bedienperson jeweils mit einer Hand leicht erreichen und bedienen. Des Weiteren kann es vorgesehen sein, dass zwischen den Bedienfeldern ein Mittelteil angeordnet ist. Dieses Mittelteil kann insbesondere zur Darstellung von Informationen, wie beispielsweise Bedienanweisungen oder sonstigen Angaben, dienen.

Erfindungsgemäß sind die Bedienfelder derart ausgerichtet, dass sie antiparallel zueinander verlaufen und gegensinnig geneigt sind, indem sie in Richtung zur Bedienperson konvergieren, vorzugsweise sind die Bedienfelder so zu einer durch den Träger beschriebenen Ebene entlang zweier Achsen gedreht. Im letztgenannten Fall bilden die Achsen, um die die beiden Bedienfelder in Bezug zum Mittelteil leicht verdreht sind einen spitzen bzw. einen stumpfen Winkel. Gleichermaßen können die Bedienfelder auch zunächst aus der Ebene des Mittelteils hinaus verdreht sein, um sodann nochmals gegenüber ihrer eigenen Ebene verdreht zu sein. Darüber hinaus ist es jedoch auch denkbar, dass die beiden Bedienfelder unterschiedlich relativ zu dem Mittelteil verdreht sind. Durch diese Ausrichtung der Bedienfelder sind die Bedienorgane auf den Bedienfeldern besonders ergonomisch durch die Bedienperson betätigbar. Insbesondere eine leicht nach hinten weg gedrehte Ausrichtung der Bedienfelder in Bezug zu der vor der Bedieneinrichtung stehenden Person, lassen sich beide Bedienfelder auf eine ergonomische Art und Weise durch die Bedienperson erreichen.

Weiter kann es ein bevorzugtes Ausführungsbeispiel der vorliegenden Erfindung vorsehen, dass das mindestens eine Bedienorgan des ersten Bedienfeldes als Taste, insbesondere Zusatztaste, und dass das mindestens eine Bedienorgan des zweiten Bedienfeldes als Taste, insbesondere Funktionstaste, ausgebildet ist. Durch diese Aufteilung der Bedienorgane in mindestens eine Zusatztaste und mindestens eine Funktionstaste sind verschiedene Tastenkombinationen und somit Tastenfunktionen realisierbar.

Durch ein weiteres Ausführungsbeispiel kann es vorgesehen sein, dass das zweite Bedienfeld mindestens vier Tasten aufweist, durch deren Betätigung die Funktionen Öffnen, Schließen, Heben und Senken der Hubladebühne initiierbar sind, wobei durch ein kombiniertes Betätigen einer oder mehrerer Tasten des zweiten Bedienfeldes mit der Taste des erstens Bedienfeldes weitere Funktionen initiierbar oder Informationen abrufbar sind, wie beispielsweise das Ein- und Ausschalten einer Hintergrundbeleuchtung der Bedienorgane und/oder der Bedieneinrichtung, das Ein- und Ausschalten eines akustischen Signales, ein Abrufen einer Spannungsangabe, ein Abrufen einer Temperatur eines Laderaums, eine Freigabe der Bedienung der Bedieneinrichtung nach erfolgreicher Eingabe eines Tastencodes oder dergleichen. So ist es denkbar, dass vor der Bedienung der Hubladebühne, insbesondere das Hubwerk, zunächst durch die Eingabe eines entsprechenden Tastencodes entsichert bzw. freizugeben ist. Sofern die Bedienperson einen falschen Tastencode eingibt, bleibt die Bedienung des Hubwerkes gesperrt. Durch diese Multifunktion der Tasten lässt sich die Sicherheit der Bedienung aber auch ein Diebstahlschutz bzw. die Bedienung der Hubladebühne durch nicht berechtigte Personen vermeiden.

Ein weiteres bevorzugtes Ausführungsbeispiel der vorliegenden Erfindung kann es vorsehen, dass die Funktionen Öffnen, Schließen, Heben und Senken durch das Hubwerk nur ausführbar ist, wenn die Betätigung der Taste des ersten Bedienfeldes und der entsprechenden Taste des zweiten Bedienfeldes in einem vorbestimmten Zeitintervall erfolgt, wobei die Bedieneinrichtung einen Prozessor aufweist, durch den die Funktionen steuerbar sind und über welchen den Tasten verschiedene Funktionen zuordbar sind. Dabei sind die durch die Bedienung der Bedienorgane erzeugte Signale einer logischen Schaltung zuführbar. Nur wenn die Signale mindestens von zwei Bedienorganen in das vorbestimmte Zeitintervall fallen, wird eine zu bestimmende, bzw. programmierbare Funktion ausgeführt. Sofern ein zweites Signal eines Bedienorganes nicht in dieses Zeitintervall fällt, wird die Funktion nicht durchgeführt. Darüber hinaus ist es denkbar, dass die Funktion nur beendet wird, solange die Tasten gedrückt bleiben. Der Prozessor sowie weitere elektronische Bauteile sowie die Verbindung der Bedienorgane werden in den Träger eingegossen, sodass sie zum einen sicher sind vor Manipulation, aber zum anderen auch geschützt sind vor Umwelteinflüssen wie Sonne, Feuchtigkeit, Salz, Öl und mechanischen Schäden.

Vorzugsweise kann es außerdem vorgesehen sein, dass auf oder in dem Träger zwischen dem ersten und dem zweiten Bedienfeld eine Anzeige, vorzugsweise mindestens eine Siebensegmentanzeige, angeordnet ist, zur Anzeige von Informationen wie beispielsweise einer Bordspannung, einer Temperatur eines Laderaums, eines Fehlercodes, eines Authentifizierungscodes oder dergleichen. Dabei ist die Anzeige entweder direkt auf einer Oberfläche des Trägers aufgebracht oder derart in den Träger eingegossen, dass Leuchtmittel der Anzeige, wie beispielsweise LEDs durch eine transparente Oberfläche des Trägers hindurchscheinen. Bei dieser Anzeige kann es sich auch um eine Betriebsanzeige handeln, die die Funktion bzw. eine Fehlfunktion der Hubladebühne anzeigt. Bei der Anzeige kann es sich somit um eine einfache einzelne LED oder um eine bzw. mehrere Siebensegmentanzeigen handeln. Es ist außerdem denkbar, dass die Bedieneinrichtung ein zusätzliches Touchdisplay aufweist zur Eingabe weiterer Steuerbefehle bzw. Informationen. Dabei sind sowohl die Bedienorgane als auch alle weiteren Eingabemittel derart beschaffen, dass sie sich auch bei Feuchtigkeit bzw. mit Handschuhen auf eine einfache Art und Weise bedienen lassen.

Des Weiteren kann es die Erfindung vorsehen, dass der Prozessor über einen Datenbus mit einer Steuereinrichtung des Fahrzeuges verbunden ist, um beispielsweise weitere Funktionen durchzuführen oder zur Durchführung einer Fehlerdiagnose. So können beispielsweise Informationen von einer Steuereinrichtung des Fahrzeuges auf die Bedieneinrichtung der Hubladebühne übertragen werden oder anders herum. Die hier beschriebene Bedieneinrichtung lässt sich direkt mit bestehenden Hubwerken von Fahrzeugen kombinieren bzw. sind die Signal- sowie Energieversorgungsleitungen miteinander kompatibel. Bestehende Bedieneinrichtungen lassen sich somit auf eine einfache Art und Weise mit der hier beschriebenen Bedieneinrichtung austauschen. Durch diesen Austausch und die Kompatibilität der einzelnen Komponente können die weiteren Funktionen im Zusammenhang mit dem Fahrzeug durchgeführt werden.

Um die Bedienung der Bedieneinrichtung für jede Bedienperson individuell besonders ergonomisch zu gestalten, kann es vorgesehen sein, dass die seitlichen Bedienfelder bzw. die gegenüberliegenden Abschnitte des Trägers durch ein Scharnier, vorzugsweise ein Filmscharnier, mit dem Mittelteil des Trägers beweglich verbunden sind. Es ist denkbar, dass während der Fahrt die seitlichen Bedienfelder in einer Ebene mit dem Mittelteil liegen und für die Bedienung durch die Bedienperson in eine für die Bedienperson vorteilhafte Stellung verschwenkbar sind.

Schließlich kann es erfindungsgemäß außerdem vorgesehen sein, dass eine Spannungsversorgung der Bedieneinrichtung zur Übertragung eines PWM-Signales dient, insbesondere zur Übermittlung von Fehlermeldungen oder Diagnosemeldungen. Durch diese Verschlüsselung der Signale lässt sich eine besonders hohe Sicherheit bei der Bedienung der Hubladebühne erzeugen.

Bevorzugte Ausführungsbeispiele der Bedieneinrichtung werden nachfolgend anhand der Zeichnung näher erläutert. In dieser zeigen:
- Fig. 1: eine perspektivische Darstellung eines ersten Ausführungsbeispiels der Bedieneinrichtung,
- Fig. 2: eine perspektivische Darstellung eines zweiten Ausführungsbeispiels,
- Fig. 3: eine Frontalansicht der Bedieneinrichtung, und
- Fig. 4: eine Sicht auf die Bedieneinrichtung.

Die hier gezeigte Bedieneinrichtung 10 dient zum Betätigen einer in den Figuren nicht dargestellten Hubladebühne am Heck eines Fahrzeuges, insbesondere eines Kraftfahrzeugs. Die Hubladebühne verfügt neben der Bedieneinrichtung 10 über eine Ladeplattform und ein Hubwerk, welches die Ladeplattform auch mit einem Fahrgestell des Fahrzeugs verbindet. Die Hubladebühne ist derart der Rückseite des Fahrzeugs zugeordnet, dass die Ladeplattform während der Fahrt des Fahrzeugs gegen die Rückseite eines Aufbaus, vorzugsweise eines Kofferaufbaus, des Fahrzeuges geschwenkt ist. Das Hubwerk verfügt vorzugweise über Hydraulikzylinder, die die Ladeplattform sowohl verschwenken als auch anheben und absenken können. Ggf. kann die Hubladebühne noch weitere Funktionen aufweisen, die von der Bedieneinrichtung 10 zu steuern sind.

Die Bedieneinrichtung 10 ist an einer Seite des Fahrzeugs üblicherweise in Staaten mit Rechtsverkehr an der rechten Seite des Fahrzeugaufbaus angeordnet. Zur Bedienung der Hubladebühne steht eine Bedienperson seitlich neben dem Fahrzeug vor der Bedieneinrichtung 10, um die Bedieneinrichtung 10 beidhändig zu bedienen.

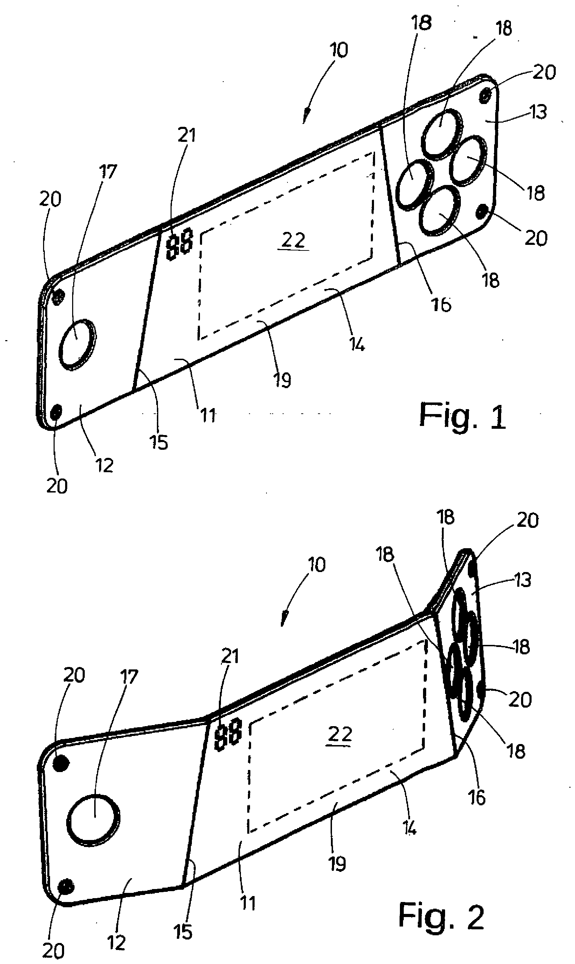

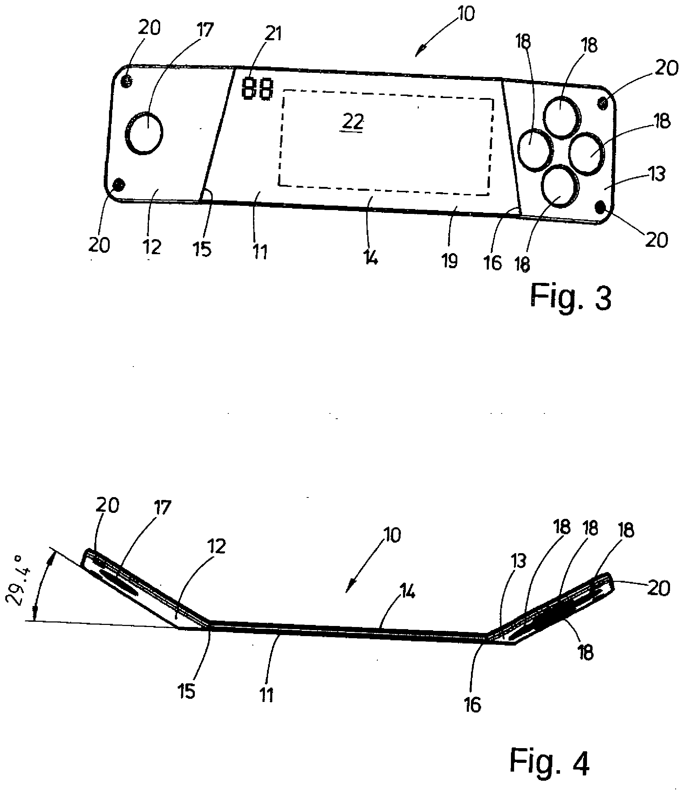

Die in der Fig. 1 dargestellte Bedieneinrichtung weist einen plattenartigen Träger 11 auf. Dieser plattenartige Träger 11 ist in drei Abschnitte unterteilt, nämlich in ein erstes Bedienfeld 12, ein zweites Bedienfeld 13 sowie in ein zwischen den beiden Bedienfeldern 12, 13 angeordnetes Mittelteil 14. Bei dem in der Fig. 1 dargestellten Ausführungsbeispiel liegen die Bedienfelder 12, 13 und das Mittelteil 14 alle in einer Ebene. Es ist jedoch auch gemäß dem in den Fig. 2 bis 4 dargestellten Ausführungsbeispiel vorgesehen, dass die Bedienfelder 12, 13 aus der Ebene des Mittelteils 14 herausgedreht sind. Bei dem dargestellten Ausführungsbeispiel sind die Bedienfelder 12, 13 um zwei antiparallele, einen spitzen oder stumpfen Winkel einschließende Achsen 15, 16 nach hinten verdreht. Diese Verdrehung kann 10° bis 60°, vorzugsweise 20° bis 45°, insbesondere 30° bis 35° betragen. Die in den Figuren dargestellten Achsen 15, 16 können auch als Scharniere, insbesondere Filmschamiere, ausgebildet sein, sodass die Bedienfelder 12, 13 individuell von der Bedienperson verdrehbar sind. Gleichermaßen ist es denkbar, dass, wie in Fig. 1 dargestellt, die Bedieneinrichtung 10 Bedienfelder 12, 13 aufweist, die unverdrehbar mit dem Mittelteil 14 in einer Ebene liegen.

Den Bedienfeldern 12, 13 sind jeweils Bedienorgane zugeordnet. Dabei ist dem ersten Bedienfeld 12 eine Zusatztaste 17 und dem zweiten Bedienfeld 13 vier in einem Raster angeordnete Funktionstasten 18 zugeordnet. Diese Tasten 17, 18 können als Druckknöpfe, Taster oder als sonstige Bedienorgane ausgebildet sein. Vorzugsweise sind die Tasten 17, 18 in der Ebene einer Oberfläche 19 des Trägers 11 zurückgesetzt oder ragen leicht über die Oberfläche 19 hinaus, sodass die Tasten 17, 18 auch ohne Blickkontakt von der Bedienperson erkennbar sind. Des Weiteren kann es vorgesehen sein, dass sowohl das erste Bedienfeld 12, als auch das zweite Bedienfeld 13 mehr oder weniger Tasten 17, 18 aufweisen. Auch die Anordnung der Funktionstasten 18 auf dem zweiten Bedienfeld 13 kann von dem hier dargestellten abweichen.

Den Bedienfeldern 12, 13 sind jeweils in Eckbereichen Bohrungen 20 zugeordnet, über die sich die Bedieneinrichtung 10 bzw. der Träger 11 an dem Fahrzeug bzw. der Ladebordwand befestigen lässt. Da das Eigengewicht der Bedieneinrichtung 10 relativ gering ist, kann selbige an einer Vielzahl verschiedener Positionen an oder unter der Ladebordwand flexibel angebracht werden.

Dem Mittelteil 14 ist mindestens eine Anzeige zur Darstellung eines Betriebsmodus oder weiterer Informationen zugeordnet. Bei dem in den Figuren dargestellten Ausführungsbeispiel handelt es sich dabei um zwei Siebensegmentanzeigen 21. Es ist jedoch gleichermaßen denkbar, dass dem Mittelteil 14 nur eine oder mehr als zwei Siebensegmentanzeigen 21 zugeordnet sind.

Des Weiteren weist das Mittelteil 14 eine Fläche 22 auf zur Widergabe von Benutzerinformationen, wie beispielsweise eine Bedienanleitung für die Zusatztaste 17 bzw. die Funktionstasten 18. Die Fläche 22 kann auch zur Darstellung eines Firmenlogos oder von Sicherheitshinweisen dienen. Darüber hinaus ist es denkbar, dass diese Fläche 22 ein Display, insbesondere ein Touch-Display aufweist, über welches verschiedene Betriebsparameter oder Funktionen abrufbar sind.

Zur Steuerung der Bedieneinrichtung 10 ist in den Träger 11 ein Prozessor 23 rückseitig eingegossen. Dieser Prozessor dient der Verarbeitung sowie Steuerung der über die Tasten 17, 18 eingegebenen Signale. Je nach Tastenkombinationen können dadurch eine Vielzahl verschiedener Funktionen ausgeführt oder Informationen weitergeleitet werden. Gleichermaßen lassen sich über den Prozessor und einen nicht dargestellten Datenbus auch Informationen von dem Fahrzeug empfangen und verarbeiten. Dazu ist insbesondere der Prozessor mit einer Steuereinrichtung des Fahrzeuges sowie wenigstens dem Hubwerk der Hubladebühne verbunden. Zur Energieversorgung ist die Bedieneinrichtung 10 bzw. der Prozessor 23 mit der Bordspannung des Fahrzeuges verbunden. Gleichermaßen ist es jedoch denkbar, dass die Bedieneinrichtung 10 eine eigene Energieversorgung aufweist. Durch Betätigung der Funktionstasten 18 lassen sich die Grundfunktionen der Hubladebühne ausführen, wie beispielsweise Heben, Senken sowie Öffnen und Schließen. Dazu sind die Funktionstasten 18 jeweils im Zusammenspiel mit der Zusatztaste 17 zu bedienen. Erfindungsgemäß kann es vorgesehen sein, dass nach dem Betätigen der Zusatztaste 17 die entsprechende Funktionstaste 18 in einem bestimmten Zeitintervall erfolgen muss. Erfolgt die Betätigung der zweiten Taste nicht in dem Zeitintervall, so wird die Funktion nicht ausgeführt. Für diese Sicherheitsfunktion oder auch Kontrollfunktion werden die Signale der einzelnen Tasten 17, 18 zunächst an den Prozessor weitergeleitet und/oder über logische Bauteile miteinander verknüpft. Nur wenn die zuvor definierbaren Bedingungen in der Schaltlogik mit den Vorgaben übereinstimmen, wird die entsprechende Funktion durch beispielsweise das Hubwerk ausgeführt.

Darüber hinaus sieht es die Erfindung vor, dass weitere Funktionen über eine beliebige Tastenkombination der Zusatztaste 17 und der Funktionstaste 18 erfolgen. So kann beispielsweise die Hubladebühne erst in Betrieb genommen werden, nachdem ein gewisser Tastencode, d. h. eine Reihenfolge, in der die Tasten 17 und/oder 18 gedrückt werden, initiiert. Dies wird wiederum durch den Prozessor gesteuert. Als Bedienhilfe ist es denkbar, dass die zu bedienenden Tasten 17, 18 permanent oder nacheinander, nämlich in der zu drückenden Reihenfolge, aufleuchten. Insbesondere für den Nachtbetrieb oder den Betrieb unter schwierigen Lichtverhältnissen ist eine Beleuchtung bzw. eine indirekte Beleuchtung der Tasten 17, 18 vorteilhaft. Diese Beleuchtung der Tasten 17, 18, aber auch des Mittelteils 14, kann über eine Tastenkombination eingestellt werden. So ist es denkbar, dass die Helligkeit der Tastenbeleuchtung einstellbar ist.

Außerdem sieht es die Erfindung vor, dass über eine entsprechende Tastenkombination über die Siebensegmentanzeige 21 beispielsweise die Temperatur eines Kühlraumes des Fahrzeuges angezeigt bzw. überprüft wird. Gleichermaßen lässt sich durch die Siebensegmentanzeige 21 der Betriebsmodus bzw. eine Fahrzeugspannung oder sonstiges abrufen. Auch ist es denkbar, dass bei einer Fehlfunktion bzw. einer Tastenkombination, die nicht hinterlegt oder keine Funktion zugewiesen ist, durch den Prozessor ein akustisches oder optisches Signal erzeugt wird.

Für den Austausch von weiteren Daten, insbesondere mit der Steuereinheit des Fahrzeuges, können von dem Prozessor insbesondere pulsweiten regulierte Signale erzeugt und an die Steuereinheit übertragen bzw. empfangen werden. So können Informationen über einen Datenbus sowohl von der Steuereinrichtung des Fahrzeugs auf die Bedieneinrichtung 10 und umgekehrt erfolgen.

Der Träger 11 ist hier rechteckig dargestellt, kann aber auch quadratisch oder eine anderen Form aufweisen. Um den geltenden Sicherheitsmaßnahmen zu genügen, beträgt die Länge des Trägers 11 300 mm bis 400 mm, vorzugsweise 350 mm bis 390 mm, insbesondere 390 mm. Die Breite beläuft sich auf 50 mm bis 200 mm, vorzugsweise 75 mm bis 150 mm, insbesondere 100 mm. Der minimale Abstand zwischen den Tasten 17, 18 erfüllt die geltenden Sicherheitsstandards.

Um die Bedieneinrichtung 10 mit elektrischer Energie zu versorgen, kann selbige an das Bordnetz angeschlossen werden und sodann mit 12 Volt bzw. 24 Volt versorgt werden. Die hier dargestellte Bedieneinrichtung ist kompatibel mit bestehenden Systemen, sodass bestehende Bedieneinheiten durch die hier dargestellte Bedieneinrichtung 10 auf eine einfache Art und Weise ausgetauscht werden kann. Dies ist insbesondere möglich, da die Bedieneinrichtung 10 sowohl die Grundfunktionen Schließen, Öffnen, Heben sowie Senken jedoch auch weitere Zusatzfunktionen ausführen kann.

### Bezugszeichenliste:

- 10: Bedieneinrichtung
- 11: Träger
- 12: erstes Bedienfeld
- 13: zweites Bedienfeld
- 14: Mittelteil
- 15: Achse
- 16: Achse
- 17: Zusatztaste
- 18: Funktionstaste
- 19: Oberfläche
- 20: Bohrung
- 21: Siebensegmentanzeige
- 22: Fläche
- 23: Prozessor

## Patentansprüche

1. Bedieneinrichtung (10), insbesondere Bedienpanel, für eine Hubladebühne an einem Fahrzeug, die eine Ladeplattform und ein Hubwerk aufweist, wobei das Hubwerk die Ladeplattform mit einem Fahrgestell des Fahrzeuges verbindet, mit von Hand zu betätigenden Bedienorganen und mit Bedienfeldern (12, 13), auf denen die Bedienorgane angeordnet sind, wobei die Bedieneinrichtung (10) von einer Bedienperson mit beiden Händen zu betätigen ist und wobei die Bedienorgane jedes Bedienfeldes (12, 13) von einer Hand zu betätigen ist, wobei die Bedienfelder (12, 13) mit den Bedienorganen auf einem plattenartigen Träger (11) angeordnet sind, **dadurch gekennzeichnet, dass** die Bedienfelder (12, 13) antiparallel zueinander ausgerichtet und gegensinnig geneigt sind, indem sie in Richtung zur Bedienperson konvergieren.

2. Bedieneinrichtung (10) für eine Hubladebühne nach Anspruch 1, **dadurch gekennzeichnet, dass** der Träger (11) rechteckig ausgebildet ist und zwei gegenüberliegende Abschnitte des Trägers (11) jeweils ein Bedienfeld (12, 13) aufweisen, nämlich ein erstes (12) und ein zweites Bedienfeld (13).

3. Bedieneinrichtung (10) für eine Hubladebühne nach Anspruch 2, **dadurch gekennzeichnet, dass** die Bedienfelder (12, 13) zu einer durch den Träger (11) beschriebenen Ebene um zwei Achsen (15, 16) gedreht sind.

4. Bedieneinrichtung (10) für eine Hubladebühne nach einem der vorherigen Ansprüche, **dadurch gekennzeichnet, dass** das mindestens eine Bedienorgan eines ersten Bedienfeldes (12) als Taste, insbesondere Zusatztaste (17), und dass das mindestens eine Bedienorgan eines zweiten Bedienfeldes (13) als Taste, insbesondere Funktionstaste (18), ausgebildet ist.

5. Bedieneinrichtung (10) für eine Hubladebühne nach Anspruch 4, **dadurch gekennzeichnet, dass** das zweite Bedienfeld (13) mindestens vier Tasten aufweist, durch deren Betätigung die Funktionen Öffnen, Schließen, Heben und Senken der Hubladebühne initiierbar sind, wobei durch ein kombiniertes Betätigen einer oder mehrerer Tasten des zweiten Bedienfeldes (13) mit der Taste des ersten Bedienfeldes (12) weitere Funktionen initiierbar oder Informationen abrufbar sind, wie beispielsweise das Ein- und Ausschalten einer Hintergrundbeleuchtung der Bedienorgane und/oder der Bedieneinrichtung (10), das Ein- und Ausschalten eines akustischen Signales, ein Abrufen einer Spannungsangabe, ein Abrufen einer Temperatur eines Laderaums, eine Freigabe der Bedienung der Bedieneinrichtung (10) nach erfolgreicher Eingabe eines Tastencodes oder dergleichen.

6. Bedieneinrichtung (10) für eine Hubladebühne nach einem der vorherigen Ansprüche 4 und 5, **dadurch gekennzeichnet, dass** die Funktionen Öffnen, Schließen, Heben und Senken durch das Hubwerk nur ausführbar ist, wenn die Betätigung der Taste des ersten Bedienfeldes (12) und der entsprechenden Taste des zweiten Bedienfeldes (13) in einem vorbestimmbaren Zeitintervall erfolgt, wobei die Bedieneinrichtung (10) einen Prozessor aufweist, durch den die Funktionen steuerbar sind und über welchem den Tasten verschiedene Funktionen zuordbar sind.

7. Bedieneinrichtung (10) für eine Hubladebühne nach einem der vorherigen Ansprüche 4 bis 6, **dadurch gekennzeichnet, dass** auf oder in dem Träger (11) zwischen dem ersten und dem zweiten Bedienfeld (12, 13) eine Anzeige, vorzugsweise mindestens eine Siebensegmentanzeige (21), angeordnet ist, zur Anzeige von Informationen wie beispielsweise einer Bordspannung, einer Temperatur eines Laderaums, eines Fehlercodes, eines Authentifizierungscodes oder dergleichen.

8. Bedieneinrichtung (10) für eine Hubladebühne nach Anspruch 6, **dadurch gekennzeichnet, dass** der Prozessor über einen Datenbus mit einer Steuereinrichtung des Fahrzeugs verbunden ist, um beispielsweise weitere Funktionen durchzuführen oder zur Durchführung einer Fehlerdiagnose.

9. Bedieneinrichtung (10) für eine Hubladebühne nach einem der vorherigen Ansprüche, **dadurch gekennzeichnet, dass** die seitlichen Bedienfelder (12, 13) bzw. die gegenüberliegenden Abschnitte des Trägers (11) durch ein Scharnier, vorzugsweise ein Filmscharnier, mit dem Mittelteil (14) des Trägers (11) entlang der Achsen (15, 16) beweglich verbunden sind.

10. Bedieneinrichtung (10) für eine Hubladebühne nach einem der vorherigen Ansprüche, **dadurch gekennzeichnet, dass** eine Spannungsversorgung der Bedieneinrichtung (10) zur Übertragung eines PWM-Signales dient zur Übermittlung von Fehlermeldungen oder Diagnosemeldungen.

## Claims

1. Operating device (10), in particular operating panel, for a platform lift on a vehicle which has a load platform and a lifting mechanism, wherein the lifting mechanism connects the load platform to a chassis of the vehicle, with operating elements which are to be activated manually, and with operating fields (12, 13) in which the operating elements are arranged, wherein the operating device (10) can be activated by an operator with both hands, and wherein the operating elements of each operating field (12, 13) are to be activated manually, wherein the operating fields (12, 13) are arranged with the operating elements on a plate-like carrier (11), **characterized in that** the operating fields (12, 13) are oriented antiparallel to one another and are inclined in opposite directions **in that** they converge in the direction of the operator.

2. Operating device (10) for a platform lift according to Claim 1, **characterized in that** the carrier (11) is embodied as a rectangle, and two sections of the carrier (11) lying opposite one another each have an operating field (12, 13), specifically a first operating field (12) and a second operating field (13).

3. Operating device (10) for a platform lift according to Claim 2, **characterized in that** the operating fields (12, 13) are rotated about two axes (15, 16), with respect to a plane described by the carrier (11).

4. Operating device (10) for a platform lift according to one of the preceding claims, **characterized in that** the at least one operating element of a first operating field (12) is embodied as a push button key, in particular as an additional push button key (17), and **in that** the at least one operating element of a second operating field (13) is embodied as a push button key, in particular as a functional push button key (18).

5. Operating device (10) for a platform lift according to Claim 4, **characterized in that** the second operating field (13) has at least four push button keys, through the activation of which the functions of opening, closing, lifting and lowering the platform lift can be initiated, wherein further functions can be initiated through combined activation of one or more push button keys of the second operating field (13) with the push button key of the first operating field (12) or information can be called such as, for example, the switching on and off of background lighting of the operating elements and/or of the operating device (10), the switching on and off of an acoustic signal, calling a voltage indication, calling a temperature of a loading space, release of the operator control of the operating device (10) after successful inputting of a push button key code or the like.

6. Operating device (10) for a platform lift according to one of the preceding Claims 4 and 5, **characterized in that** the functions of opening, closing, lifting and lowering can be carried out by the lifting mechanism only if the activation of the push button key of the first operating field (12) and the activation of the corresponding push button key of the second operating field (13) take place in a predeterminable time interval, wherein the operating device (10) has a processor by which the functions can be controlled and via which the various functions can be assigned to the push button keys.

7. Operating device (10) for a platform lift according to one of the preceding Claims 4 to 6, **characterized in that** a display, preferably at least one seven segment display (21), is arranged on or in the carrier (11), between the first and second operating fields (12, 13), for the purpose of displaying information such as, for example, an on-board voltage, a temperature of a loading space, a fault code, an authentication code or the like.

8. Operating device (10) for a platform lift according to Claim 6, **characterized in that** the processor is connected to a control device of the vehicle via a data bus, in order, for example, to carry out further functions or to carry out a fault diagnosis.

9. Operating device (10) for a platform lift according to one of the preceding claims, **characterized in that** the lateral operating fields (12, 13) or the opposite sections of the carrier (11) are connected by a hinge, preferably a film hinge, to the centre part (14) of the carrier (11) along the axes (15, 16).

10. Operating device (10) for a platform lift according to one of the preceding claims, **characterized in that** a voltage supply of the operating device (10) serves to transmit a PWM signal to transfer fault messages or diagnostic messages.

## Revendications

1. Dispositif de commande (10), en particulier un panneau de commande, pour une plateforme de chargement par levage sur un véhicule qui comporte une plateforme de chargement et un mécanisme de levage, dans lequel le mécanisme de levage relie la plateforme de chargement à un châssis du véhicule, à des organes de commande à actionnement manuel et à des tableaux de commande (12, 13) sur lesquels sont disposés les organes de commande, dans lequel le dispositif de commande (10) peut être actionné par un opérateur avec les deux mains et dans lequel les organes de commande de chaque tableau de commande (12, 13) peuvent être actionnés par une seule main, dans lequel les tableaux de commande (12, 13) sont disposés, avec les organes de commande, sur un support (11) de type plaque, **caractérisé en ce que** les tableaux de commande (12, 13) sont orientés de manière antiparallèle les uns par rapport aux autres et sont inclinés dans des directions opposées en convergeant en direction de l'opérateur.

2. Dispositif de commande (10) pour une plateforme de chargement par levage selon la revendication 1, **caractérisé en ce que** le support (11) est rectangulaire et **en ce que** deux parties opposées du support (11) comportent respectivement un tableau de commande (12, 13), à savoir un premier (12) et un second (13) tableau de commande.

3. Dispositif de commande (10) pour une plateforme de chargement par levage selon la revendication 2, **caractérisé en ce que** les tableaux de commande (12, 13) sont amenés à tourner autour de deux axes (15, 16) par rapport à un plan décrit par le support (11).

4. Dispositif de commande (10) pour une plateforme de chargement par levage selon l'une des revendications précédentes, **caractérisé en ce que** ledit au moins un organe de commande d'un premier tableau de commande (12) est réalisé sous la forme d'une touche, en particulier d'une touche supplémentaire (17), et **en ce que** ledit au moins un organe de commande d'un second tableau de commande (13) est réalisé sous la forme d'une touche, en particulier d'une touche de fonction (18).

5. Dispositif de commande (10) pour une plateforme de chargement par levage selon la revendication 4, **caractérisé en ce que** le second tableau de commande (13) comporte au moins quatre touches, dont l'actionnement permet de déclencher les fonctions d'ouverture, de fermeture, de levage et d'abaissement de la plateforme de chargement par levage, dans lequel d'autres fonctions peuvent être déclenchées ou des informations peuvent être consultées par un actionnement combiné d'une ou de plusieurs touches du second tableau de commande (13) au moyen de la touche du premier tableau de commande (12), comme par exemple l'allumage et l'extinction d'un éclairage d'arrière-plan des organes de commande et/ou du dispositif de commande (10), l'activation et la désactivation d'un signal acoustique, la consultation d'une indication de tension, la consultation de la température d'un espace de chargement, un déclenchement du dispositif de commande (10) après la saisie réussie d'un code de touche ou autre.

6. Dispositif de commande (10) pour une plateforme de chargement par levage selon l'une des revendications 4 et 5 précédentes, **caractérisé en ce que** les fonctions d'ouverture, de fermeture, de levage et d'abaissement ne peuvent être exécutées que par le mécanisme de levage, lorsque l'actionnement de la touche du premier tableau de commande (12) et de la touche correspondante du second tableau de commande (13) est effectué à un intervalle de temps prédéterminé, dans lequel le dispositif de commande (10) comporte un processeur par lequel les fonctions peuvent être commandées et au moyen duquel différentes fonctions peuvent être attribuées aux touches.

7. Dispositif de commande (10) pour une plateforme de chargement par levage selon l'une des revendications 4 à 6 précédentes, **caractérisé en ce qu'**un afficheur, de préférence au moins un afficheur à sept segments (21), est disposé sur ou dans le support (11) entre les premier et second tableaux de commande (12, 13) pour l'affichage d'informations, comme par exemple une tension de bord, une température d'un espace de chargement, un code d'erreur, un code d'authentification ou autre.

8. Dispositif de commande (10) pour une plateforme de chargement par levage selon la revendication 6, **caractérisé en ce que** le processeur est relié par l'intermédiaire d'un bus de données à un dispositif de commande du véhicule, par exemple pour exécuter d'autres fonctions ou pour exécuter un diagnostic d'erreur.

9. Dispositif de commande (10) pour une plateforme de chargement par levage selon l'une des revendications précédentes, **caractérisé en ce que** les tableaux de commande latéraux (12, 13) ou les parties opposées du support (11) sont reliés à la partie centrale (14) du support (11) par une charnière, de préférence une charnière à film, de manière ce qu'ils soient mobiles le long des axes (15, 16).

10. Dispositif de commande (10) pour une plateforme de chargement par levage selon l'une des revendications précédentes, **caractérisé en ce qu'**une alimentation en tension du dispositif de commande (10) permettant la transmission d'un signal PWM sert à transmettre des messages d'erreur ou des messages de diagnostic.
